# EUROPEAN PATENT SPECIFICATION

(11) **EP 3 147 496 B1**
(45) Date of publication and mention of the grant of the patent: **20.03.2024**
(21) Application number: 16188349.1
(22) Date of filing: 12.09.2016
(51) Int. Cl.: F02N 11/04, F02N 19/00, G01P 13/04, F02N 11/08, F02D 41/00, F02N 11/10, H02P 6/20

(54) **ENGINE START CONTROL SYSTEM FOR SADDLE-RIDE TYPE VEHICLES**
MOTORSTARTSTEUERUNGSSYSTEM FÜR SATTELFAHRZEUGE
SYSTÈME DE COMMANDE DE DÉMARRAGE DE MOTEUR POUR VÉHICULES DE TYPE À SELLE

(30) Priority: 28.09.2015 JP 2015189913
(43) Date of publication of application: 29.03.2017
(73) Proprietor: Honda Motor Co., Ltd., Minato-ku Tokyo 107-8556 (JP)
(72) Inventor: OGINO, Kazumasa, Wako-shi, Saitama 351-0193 (JP); NAGATSUYU, Toshiya, Wako-shi, Saitama 351-0193 (JP); OSAWA, Toshifumi, Wako-shi, Saitama 351-0193 (JP); FUKAYA, Shuichi, Wako-shi, Saitama 351-0193 (JP); TSUCHIYA, Takashi, Wako-shi, Saitama 351-0193 (JP); KAMON, Kunihito, Wako-shi, Saitama 351-0193 (JP)
(74) Representative: Brevalex

(56) References cited:
- EP-A1- 1 321 667
- EP-A1- 1 574 692
- EP-A1- 2 280 162
- EP-A1- 2 573 372
- WO-A1-2016/016812
- DE-A1- 4 430 651
- US-A1- 2010 250 105
- US-A1- 2014 035 503

## Description

### [Technical Field]

The present invention relates to an engine start control system for a saddle-ride type vehicle and, more particularly, to an engine start control system for a saddle-ride type vehicle which rotates a crankshaft to a predetermined position in the reverse direction when the engine starts and immediately after the engine stops.

### [Technical Field]

An engine start control system is previously known, which causes an ACG starter motor rotating in synchrony with a crankshaft to rotate in the reverse direction to drive a crankshaft to a predetermined position ATDC (After Top Dead Center) on compression in order for the crankshaft to make an approach run from the predetermined position for forward rotation drive, for the purpose of reducing the cranking torque at engine start-up for improved startability.

Patent Literature 1 discloses the configuration in which, after the start of driving reverse rotation, when a compression reaction force of a piston exceeds the driving force of an ACG starter motor as the piston approaches a predetermined position ATDC on compression, the piston is pushed back, and therefore this is effectively used to cause determining based on an output signal from a motor rotation sensor that the direction of rotation has been changed from reverse to forward, which triggers stopping the driving of reverse rotation.

### [Citation List]

### [Patent Literature]

[Patent Literature 1] JP-A No. 2010-223135

### [Summary of Invention]

### [Technical Problem]

In the technology according to Patent Literature 1, however, if, during the reverse rotation drive, noise or the like is caused by the ACG starter motor, the motor angle sensor may possibly detect the noise as a forward rotation signal to cause the reverse rotation drive to be stopped before the piston reaches the predetermined position ATDC on compression. In particular, if the reverse rotation drive is stopped at the instant following the starting thereof, it is conceivable that an adequate approach run period may not be obtained to produce less effect of improving the startability.

It is, accordingly, an object of the present invention to provide an engine start control system of a saddle-ride type vehicle that is capable of satisfactorily performing the reverse rotation drive of the crankshaft even if a motor angle sensor is affected by noise, which addresses the above technical problem in the related art.
US 2010/0250105 A1 respectively EP 2 280 162 A1 relate to an engine start system for a motorcycle according to the preamble of claim 1.

The patent application DE 44 30 651 A1 is a further very interesting example of the prior art.

### [Solution to Problem]

To attain this object, a first aspect of the present invention provides an engine start control system for a saddle-ride type vehicle, comprising:
an integrated starter generator (70) rotating in synchrony with a crankshaft (51) of an engine (E) and driving a forward rotation and a reverse rotation of the crankshaft (51), and
a control unit (80) configured for controlling the integrated starter generator (70),
a motor angle sensor (29) for detecting a rotation angle of the integrated starter generator (70),
the control unit (80) is configured for determining on the basis of the motor angle sensor output the motor rotation direction of the integrated starter generator (70), and
   the control unit (80) is configured to operate the integrated starter generator (70) to drive the reverse rotation of the crankshaft (51) after the engine (E) has stopped, wherein:
   the control unit (80) is configured for deriving a motor rotation-direction signal on the basis of the motor angle sensor output and the determined motor rotation direction at every time the integrated starter generator (70) rotates 10 degrees, wherein
   rotation-direction signal is incremented during forward rotation of the crankshaft (51) and inversely decremented during reverse rotation of the crankshaft (51),
   the control unit (80) is configured to maintain reverse rotation drive during a predetermined time period until the rotation direction signal has been successively decremented three times (t4) after the start (t1) of the reverse rotation state of the crankshaft (51) caused by the integrated starter generator (70) and until the rotation-direction signal is incremented (t7) . Preferred features of the invention are disclosed in the dependent claims.

A second aspect is that, when a forward rotation state of the crankshaft (51) is detected after the reverse rotation state of the crankshaft (15) is detected successively during the predetermined time period, the control unit (80) is configured to stop the reverse rotation drive of the crankshaft (51) caused by the integrated starter generator (70).

A third aspect is that the control unit (80) is configured to derive motor stages (0 to 5) having values varied for each predetermined angle of the crankshaft (51) on the basis of sensor output of the motor angle sensor (29), and
the control unit (80) is configured to compare a current value and the preceding value of the motor stages (0 to 5) with each other in order to determine for the each predetermined angle whether the crankshaft (51) is in the reverse rotation state or the forward rotation state.

A fourth aspect is that, when a first forward rotation state of the crankshaft (51) is detected after the reverse rotation state is detected successively during the predetermined time period, the control unit (80) is configured to stop the reverse rotation drive of the crankshaft (51).

A fifth aspect is that
the control unit (80) is configured to perform engine start control to cause the integrated starter generator (70) to drive a forward rotation of the crankshaft (51) after the reverse rotation drive is stopped, and
the control unit (80) is configured to stop the forward rotation and to perform a reverse rotation again when the reverse rotation state of the crankshaft (51) is detected after the forward rotation drive under the engine start control is started.

Further, a sixth aspect is that the control unit (80) is configured to derive motor stages (0 to 5) having values varied for each predetermined angle of the crankshaft (51) on the basis of sensor output of the motor angle sensor (29),
the control unit (80) is configured to compare a current value and the preceding value of the motor stages (0 to 5) with each other in order to determine for the each predetermined angle whether the crankshaft (51) is in the reverse rotation state or the forward rotation state, and
after the forward rotation drive under the engine start control is started, and after the forward rotation state of the crankshaft (51) is detected successively during a second predetermined time period, when a first reverse rotation state of the crankshaft (51) is detected, the control unit (80) is configured to stop the forward rotation drive of the crankshaft (51) and to perform a reverse rotation drive of the crankshaft (51) again.

### [Advantageous Effects of Invention]

According to the first aspect, the control unit (80) determines on the basis of sensor output of a motor angle sensor (29) detecting a rotation angle of the integrated starter generator (70) whether the crankshaft (51) is in a reverse rotation state or a forward rotation state. Then, the control unit (80) maintains reverse rotation drive until the reverse rotation state of the crankshaft (51) is detected successively during at least a predetermined time period after the start of the reverse rotation drive of the crankshaft (51) caused by the integrated starter generator (70). As a result, even if the forward rotation state is detected due to a noise pulse immediately after the start of reverse rotation drive, the reverse rotation drive can be continued without interruption, enabling the reverse rotation drive of the crankshaft to a desired reverse rotation stop point with accuracy.

In this manner, allowing for, for example, a phenomenon in which noise is likely to occur from the integrated starter generator immediately after the start of energizing the integrated starter generator, in regard to the reverse rotation signal of the forward rotation and reverse rotation signals of the rotation direction signals indicating the forward rotation and the reverse rotation output at every time the crankshaft rotates 10 degrees, the setting is made to detect the reverse rotation signal of the forward rotation and reverse rotation signals three times in succession within a predetermined time period. This makes it possible to prevent the reverse rotation drive from being stopped at too early timing due to noise.

According to the second aspect, when a forward rotation state of the crankshaft (51) is detected after the reverse rotation state of the crankshaft (15) is detected successively during the predetermined time period, the reverse rotation drive is stopped. As a result, after sufficient reverse rotation drive, the reverse rotation drive can be stopped by detecting the forward rotation state. In this manner, for example, when the starter switch is operated to start the engine, the rotation is reversed once to a predetermined position before the forward rotation is started. This enables switching from the reverse rotation drive to the forward rotation drive at good timing in the "engine startup swing back control" with a longer approach-run period until compression TDC. Further, for example, when the engine is temporarily stopped because the idle stop conditions are met, the crankshaft is rotated in the reverse direction from the stop position to a predetermined position. This makes it possible to stop the crankshaft at a satisfactory rotation angle in the "idle stop starting time reversing control" with a longer approach-run period when the forward rotation drive involved in the restart operation after the above temporary stop is performed.

In this manner, allowing for a phenomenon in which noise is likely to occur from the integrated starter generator immediately after the start of energizing the integrated starter generator, for example, "successive detection of three reverse rotation signals which are output at every time the crankshaft rotates 10 degrees" is set to occur within a predetermined time period. This makes it possible to prevent the reverse rotation drive from being stopped at too early timing due to noise.

According to the third aspect, the control unit (80) derives motor stages (0 to 5) having values varied for each predetermined angle of the crankshaft (51) on the basis of sensor output of the motor angle sensor (29); and compares a current value and the preceding value of the motor stages (0 to 5) with each other in order to determine for each predetermined angle whether the crankshaft (51) is in the reverse rotation state or the forward rotation state. Because of this, the stable state of the reverse rotation drive of the crankshaft is able to be detected for a short time and also the reverse rotation drive is able to be stopped at a desired stop position with accuracy.

According to the fourth aspect, when a first forward rotation state of the crankshaft (51) is detected after the reverse rotation state is detected successively during the predetermined time period, the reverse rotation drive is stopped. This makes it possible to position the crankshaft in a desired reverse rotation drive position with accuracy, and to minimize power consumption.

According to the fifth aspect, the control unit (80) performs engine start control to cause the integrated starter generator (70) to drive a forward rotation of the crankshaft (51) after the reverse rotation drive is stopped; and stops the forward rotation and performs a reverse rotation again when the reverse rotation state of the crankshaft (51) is detected after the forward rotation drive under the engine start control is started. Because of this, if the event that enough torque for the crankshaft to pass through compression TDC cannot obtained during the start control occurs, the reverse rotation control is able to be automatically performed again to increase the startability in the next start operation.

According to the sixth aspect, the control unit (80) derives motor stages (0 to 5) having values varied for each predetermined angle of the crankshaft (51) on the basis of sensor output of the motor angle sensor (29); and compares a current value and the preceding value of the motor stages (0 to 5) with each other in order to determine for each predetermined angle whether the crankshaft (51) is in the reverse rotation state or the forward rotation state; and after the forward rotation drive under the engine start control is started, and after the forward rotation state of the crankshaft (51) is detected successively during a second predetermined time period, when a reverse rotation state of the crankshaft (51) is detected, the forward rotation drive is stopped and a revere rotation drive is performed again. Because of this, allowing for a phenomenon in which noise is likely to occur from the integrated starter generator immediately after the start of energizing the integrated starter generator, for example, successive detection of three forward rotation signals which are output at every time the crankshaft rotates 10 degrees is set to occur within a second predetermined time period. This makes it possible to prevent energization for the reverse rotation from being started at too early timing due to noise immediately after the forward rotation drive is started for favorable operation of another reverse rotation drive.

### [Brief Description of Drawings]

[Fig. 1] Fig. 1 is a side view of a scooter-type motorcycle to which an engine start control system in accordance with an embodiment of the present invention is applied.
[Fig. 2] Fig. 2 is an enlarged side view of a power unit of the motorcycle.
[Fig. 3] Fig. 3 is a sectional view taken along line 3-3 of Fig. 2.
[Fig. 4] Fig. 4 is a block diagram of a control system for an ACG starter motor.
[Fig. 5] Fig. 5 is a block diagram illustrating the configuration of an essential part within an ECU.
[Fig. 6] Fig. 6 is a timechart showing the relationship between sensor output of a motor angle sensor and a determination whether the rotation direction of the motor is forward or reverse.
[Fig. 7] Fig. 7 is a timechart showing the relationship between the rotational state of the ACG starter motor during the swing back control and the determination of the rotation direction.
[Fig. 8] Fig. 8 is a flowchart showing the steps of control for detecting the reverse rotation of the motor.
[Fig. 9] Fig. 9 is a flowchart showing the steps of control for detecting the forward rotation of the motor.

### [Description of Embodiments]

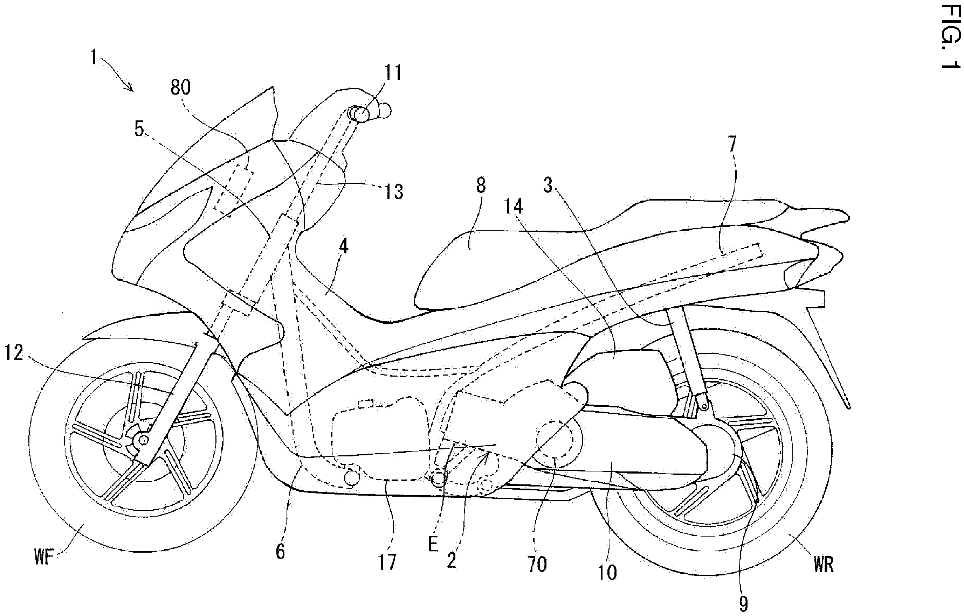

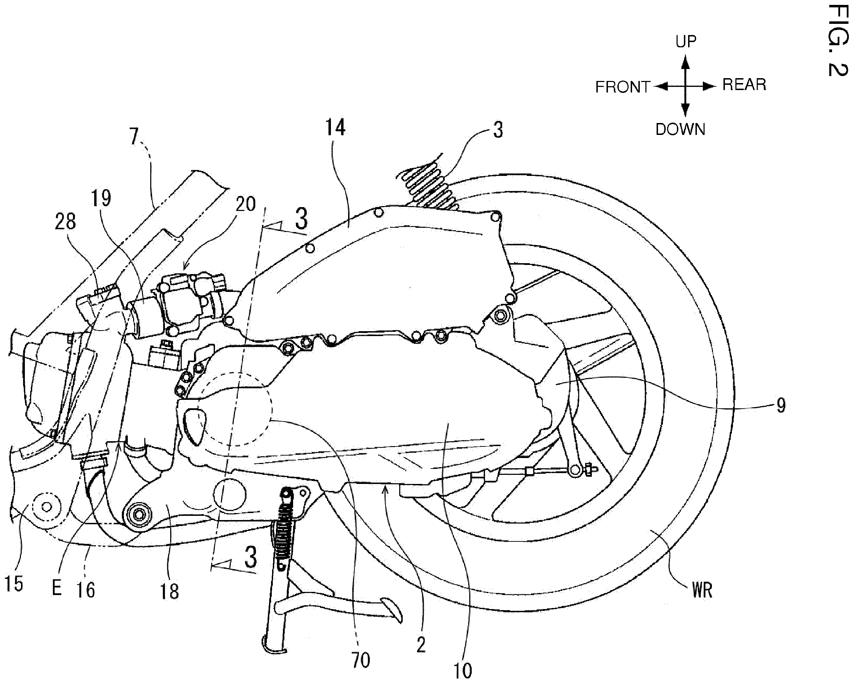

Preferred embodiments in accordance with the present invention will now be described in detail with reference to the accompanying drawings. Fig. 1 is a side view of a scooter type motorcycle 1 to which an engine start control system in accordance with an embodiment of the present invention is applied. Also, Fig. 2 is an enlarged side view of a power unit 2 of the motorcycle 1. The motorcycle 1 is a scooter type vehicle with low-slung footrests provided for an occupant to rest his/her feet thereon on the left and right sides in the vehicle width direction of a straddle portion 4 extending in the vehicle longitudinal direction. A head pipe 5, which pivotally support a steering stem 13 in a rotatable manner, is joined to a front end of a main frame 6 forming part of a body frame. A pair of left and right steering handlebars 11 is mounted on an upper portion of the steering stem 13. A pair of left and right front forks 12, which pivotally support a front wheel FW in a rotatable manner, is mounted to a lower portion of the steering stem 13. An ECU 80 serving as an engine start control system is arranged in front of the head pipe 5.

A fuel tank 17 is arranged inside the straddle portion 4 to cover the main frame 6 from above. A unit swing type power unit 2 at which a rear wheel WR is pivotally supported in a rotatable manner is mounted rearward of the fuel tank 17. A transmission case 10 in which a belt CVT is installed is mounted integrally in a rear portion of the power unit 2, and a deceleration mechanism 9 is placed at a rear end of the transmission case 10. An air cleaner box 14 is mounted on an upper portion of the transmission case 10. A hanger bracket 18 of the power unit 2 is swingably supported through a link member 16 by a bracket 15 arranged at a riser portion of a rear frame 7. A rear portion of the power unit 2 is suspended from the rear frame 7 by a rear cushion 3.

A four cycle, single cylinder engine E is arranged in front of the power unit 2. The CVT is incorporated in the transmission case 10 located rearward of the engine E, and the rear wheel WR is pivotally supported by an output shaft of the deceleration mechanism 9. A fuel injection device 28 having an injector and a throttle body 19 having a throttle valve are disposed in an intake pipe extending between the engine E and the air cleaner box 14. An ACG starter motor 70 is mounted on the inside of the transmission case 10 and at an end of a crankshaft of the engine E, the ACG starter motor 70 serving as an integrated starter generator which is a combination of a starter motor for starting the engine E and a generator generating electric power by use of the engine rotational power.

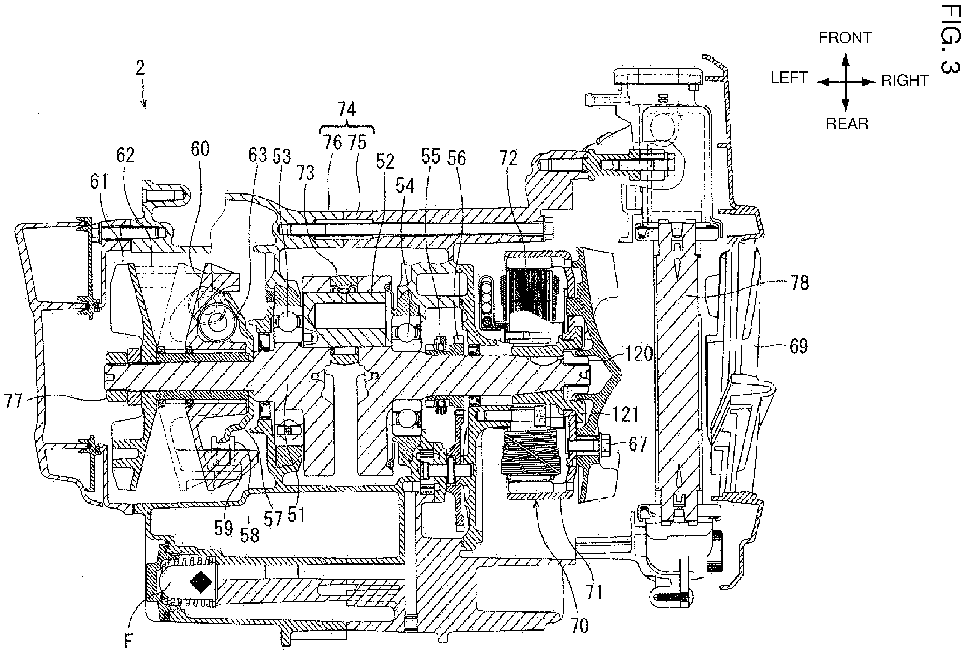

Fig. 3 is a sectional view taken along line 3-3 in Fig. 2. The power unit 2 has a crankcase 74 made up of a right case 75 on the right side in the vehicle width direction and a left case 76 on the left side in the vehicle width direction. A crankshaft 51 is rotatably supported by bearings 53, 54 fixed to the crankcase 74. A connection rod 73 is connected to the crankshaft 51 via a crankpin 52.

The left case 76 serves also as a gearbox case. A belt drive pulley, which is made up of a movable pulley half 60 and a fixed pulley half 61, is mounted at a left end of the crankshaft 51. The fixed pulley half 61 is fastened to the left end of the crankshaft 51 with a nut 77. On the other hand, the movable pulley half 60 is splined onto the crankshaft 51 to be able to slide in the axial direction. A V belt 62 is looped over and between both the pulley halves 60, 61.

A ramp plate 57 is secured to the crankshaft 51 on the right side of the movable pulley half 60. A slide piece 58 attached to an outer perimeter end of the ramp plate 57 is engaged with a ramp plate sliding boss 59 which is formed at an outer perimeter end and in the axial direction of the movable pulley half 60. The outer peripheral portion of the ramp plate 57 has a tapered surface formed to incline more toward the movable pulley half 60 with extending more outward in the radial direction. A plurality of weight rollers 63 is placed between the tapered surface and the movable pulley half 60.

As the rotational speed of the crankshaft 51 increases, the centrifugal force causes the weight rollers 63 to move radially outward. Hence, the movable pulley half 60 is moved leftward in Fig. 3 to approach the fixed pulley half 61. As a result, the V belt 62 interposed between both the pulley halves 60, 61 moves radially outward to increase the loop diameter. A driven pulley (not shown) is placed rearward of the power unit 2, in which the loop diameter of the V belt 62 varies in response to both the pulley halves 60, 61. The driving force of the engine E is automatically adjusted by the above-described belt transmission mechanism and then transferred to the rear wheel WR through a centrifugal clutch located in a rear portion of the transmission case 10 and the deceleration mechanism 9.

Within the right case 75, the ACG starter motor 70 which is a combination of a starter motor and an AC generator is arranged. The ACG starter motor 70 includes an outer rotor 71 which is fixed to a distal tapered portion of the crankshaft 51 with a mounting bolt 120, and a stator 72 which is arranged within the outer rotor 71 and fixed to the right case 75 with a mounting bolt 121. On the right side of an air-blowing fan 65 fixed to the outer rotor 71 with a mounting bolt 67 in Fig. 3, a radiator 78 and a cover member 69 with a plurality of slits formed therein are mounted.

A sprocket 55 over which a cam chain is looped to drive the valve gear is secured to the crankshaft 51 between the ACG starter motor 70 and the bearing 54. The sprocket 55 is formed integrally with a gear 56 for transferring power to an oil pump circulating engine oil.

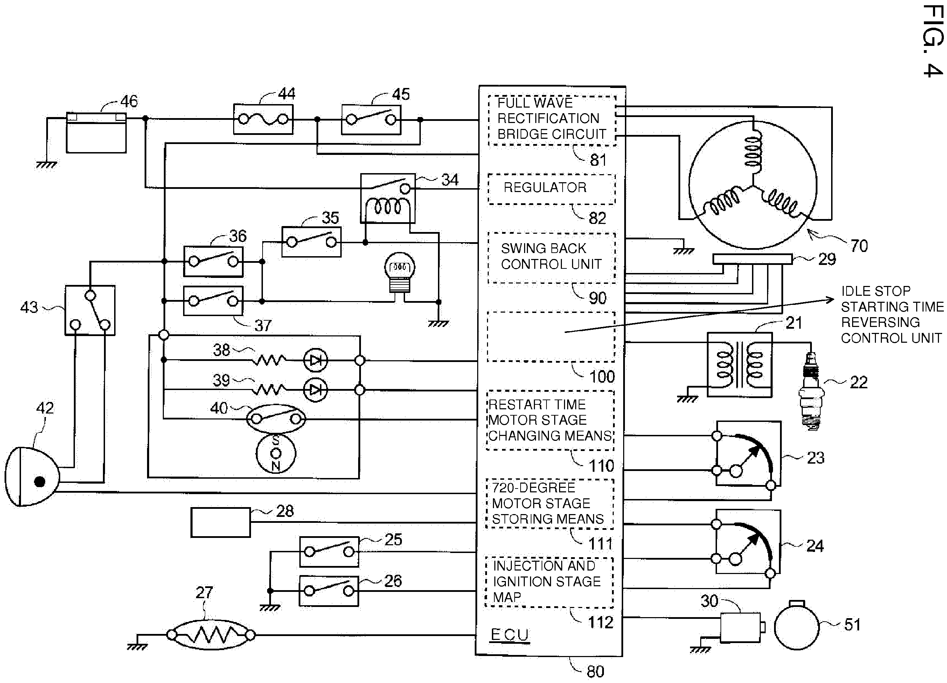

Fig. 4 is a block diagram of a control system for the ACG starter motor 70. The ECU 80 includes: a full wave rectification bridge circuit 81 that full wave rectifies three-phase AC of the ACG starter motor 70; a regulator 82 that regulates the output of the full wave rectification bridge circuit 81 to an intended regulated voltage (regulator operating voltage: e.g., 14.5V); a swing back control unit 90 that causes the crankshaft 51 to rotate in the reverse direction to a predetermined position at engine start-up; an idle stop starting time reversing control unit 100 that causes the crankshaft 51 to rotate in the reverse direction to a predetermined position at the time of starting an idle stop; restart time motor stage changing means 110 configured to set an injection/ignition stage when the engine is restarted from the idle stop state; 720-degree motor stage storing means 111 configured to store and hold a 720-degree motor stage as a crankshaft position at the time of starting the idle stop control; and an injection and ignition stage map 112 used to set the injection and ignition stages.

In the following description, the ECU 80 will be referred to as the control unit and the entire system including sensors required for the engine start control in addition to the ECU 80 will be referred to as the engine start control system.

The ECU 80 is connected to a fuel injection device 28, a motor angle sensor 29, an ignition coil 21, a throttle opening sensor 23, a fuel sensor 24, a seat switch 25 for detecting a sitting state of an occupant, an idle-stop control enable switch 26, a cooling-water temperature sensor 27 and an ignition pulsar 30, so that the ECU 80 receives detection signals from each of the sensors and the like. An ignition plug 22 is connected to a secondary side of the ignition coil 21.

Further, the ECU 80 is connected to a starter relay 34, a starter switch 35, stop switches 36, 37, a standby indicator 38, a fuel indicator 39, a vehicle-speed sensor 40 and a headlight 42. The headlight 42 is equipped with a dimmer switch 43. Each of the above components is supplied with electric power from a battery 46 via a main fuse 44 and a main switch 45.

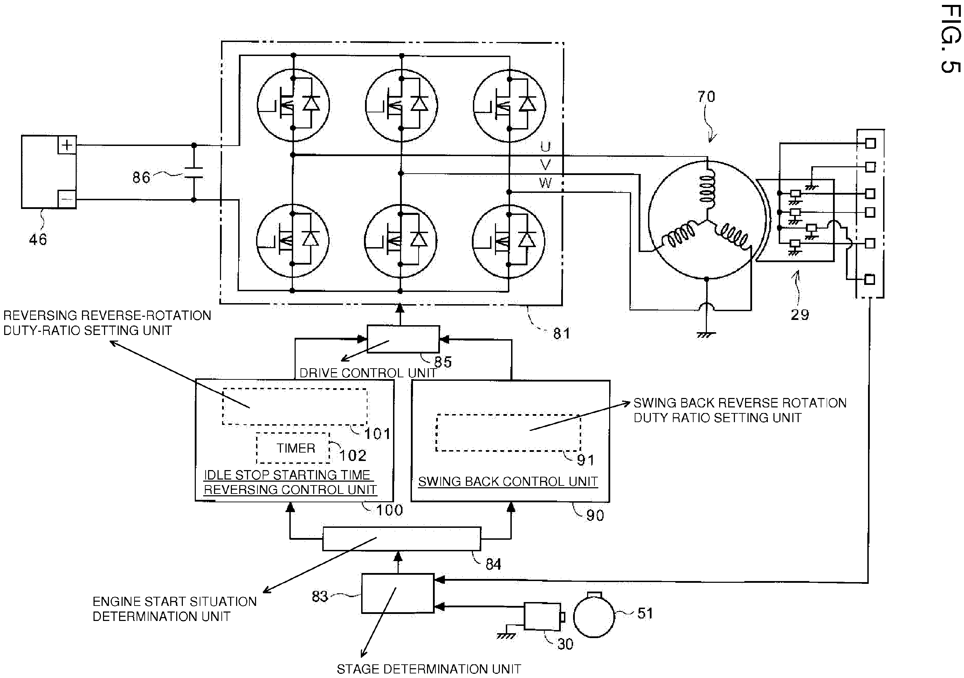

Fig. 5 is a block diagram illustrating the configuration of essential parts in the ECU 80 relating to the drive control for the ACG starter motor 70. The full wave rectification bridge circuit 81 is configured to have a parallel connection of three sets of two power FETs connected in series. A smoothing capacitor 86 is placed between the battery 46 and the full wave rectification bridge circuit 81.

A stage determination unit 83 divides two revolutions of the crankshaft 51 into 72 stages, stages #0 to #71, (720-degree motor stages) and determines a current stage on the basis of the output signals of the motor angle sensor 29 and the ignition pulsar 30. It is noted that, after the engine has started, until the completion of stroke determination (obverse/reverse determination of two revolutions of a crankshaft) on the basis of the output value of the PB sensor and the like, the stage determination is made on the 360-degree motor stages when a single revolution of the crankshaft 51 is divided into 36 stages, stage #0 to #35. The ignition pulsar 30 is provided integrally with the motor angle sensor 29 of the ACG starter motor 70, and detects a rotational angle of the ACG starter motor 70 mounted on the crankshaft 51.

The ECU (control unit) 80 in accordance with the embodiment is configured to perform "the engine startup time swing back control (hereinafter referred to simply as the "swing back control" in some cases) in which, when the starter switch 35 is operated to start the engine E from the condition of the engine E stopping, the rotation is temporarily reversed to a predetermined position, in other words, the swinging-back until a predetermined position is produced before starting a forward rotation, in order to increase the approach-run period until compression TDC for an increase in rotational speed of the crankshaft 51 to first cross compression TDC. Such swing back control may enable an improvement in startability when the engine is started with the starter switch 35.

The ECU 80 is also able to perform the idle stop control for temporarily shutting down the engine if predetermined requirements are met when the vehicle is stopped such as waiting at traffic lights. The predetermined requirements for starting the idle stop include, for example, that a predetermined length of time has been elapsed under conditions where: the idle-stop control enable switch 26 is ON; the occupant sitting on the seat is detected with the seat switch 25; the vehicle speed detected by the vehicle-speed sensor 40 is equal to or less than a predetermined value (e.g., 5km/h); the engine RPM detected by the ignition pulsar 30 is equal to or less than a predetermined value (e.g., 2000rpm); and the degree of throttle opening detected by the throttle opening sensor 23 is equal to or less than a predetermined value (e.g., five degrees). Then, when the degree of throttle opening reaches or exceeds a predetermined value during the idle stop, the engine E is configured to be restarted.

Then, the ECU 80 is configured to perform the "idle stop starting time reversing control" (hereinafter referred to simply as the "reversing control" in some cases) in which, when the above idle stop requirements are met and the engine E is temporarily stopped, the crankshaft 51 is rotated in the reverse direction to the predetermined position from the position where the crankshaft 51 has stopped, in other words, the crankshaft 51 to reverse to the predetermined position in order to increase the approach-run period to compression TDC for improved startability at restarting.

It is noted that the reversing control is not performed when the main switch 45 is turned off to stop the engine E, and when the main switch 45 is turned on again to use the starter switch 35 to start the engine E, the swing back control is performed.

An engine startup situation determination unit 84 determines whether the situation is that the engine E is started through the operation of the starter switch 35, that is, the engine E is started from the full-stop state or that the engine E is restarted through the throttle operation from the idle-stop state. Then, if the situation in which the engine E is started from the full-stop state is determined, a swing back reverse rotation duty ratio setting unit 91 included in the swing back control unit 90 sets a duty ratio used to rotate the ACG starter motor 70 in the reverse direction in the swing back control.

On the other hand, if the situation in which the engine E is restarted from the idle-stop state is determined by the engine start situation determination unit 84, a reversing reverse-rotation duty ratio setting unit 101 included in the idle stop starting time reversing control unit 100 sets a duty ratio used to rotate the ACG starter motor 70 in the reverse direction for the reversing control. It is noted that the idle stop starting time reversing control unit 100 includes a timer 102 detecting a variety of predetermined time periods.

Then, a drive control unit 85 supplies, in the swing back control, drive pulses with the duty ratio set by the swing back control unit 90 to each of the power FETs of the full wave rectification bridge circuit 81. On the other hand, in the reversing control, the drive control unit 85 supplies drive pulses with the duty ratio set by the idle stop starting time reversing control unit 100 to each of the power FETs of the full wave rectification bridge circuit 81. Thus, a duty ratio in the swing back control and a duty ratio in the reversing control are able to be set to differ from each other.

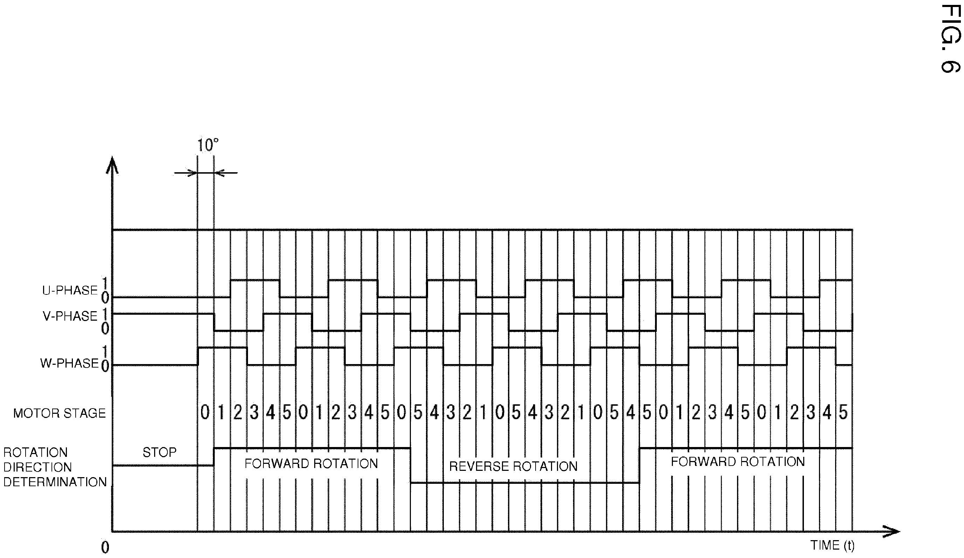

Fig. 6 is a timechart showing the relationship between the sensor output of the motor angle sensor 29 and the determination whether the rotation direction of the motor is forward or reverse. The motor angle sensor 29, in which the permanent magnets mounted on the outer rotor 71 of the three-phase AC ACG starter motor 70 are objects of interest for detection, is configured to use three Hall devices respectively corresponding to U-, V-, W-phases to detect ON/OFF (zero or one) of a change in magnetic flux produced by the permanent magnets with the rotation of the outer rotor 71.

In the timechart, the conditions of the sensor output (zero or one) for each U-, V-, W phase, the motor stages (0, 1, 2, 3, 4, 5) and the determination of rotation direction (stop, forward rotation, reverse rotation) are shown. Initially, the ECU 80 derives a motor stage on the basis of U-, V- or W-phase sensor output produced every time the ACG starter motor 70 rotates 10 degrees. Specifically, when U-phase = 0, V-phase = 1 and W-phase = 1, the motor stage is set to "0". Likewise, when U-phase = 0, V-phase = 0 and W-phase = 1, the motor stage is set to "1". When U-phase = 1, V-phase = 0 and W-phase = 1, the motor stage is set to "2". When U-phase = 1, V-phase = 0 and W-phase = 0, the motor stage is set to "3". When U-phase = 1, V-phase = 1 and W-phase = 0, the motor stage is set to "4". When U-phase = 0, V-phase = 1 and W-phase = 0, the motor stage is set to "5". The ECU 80 compares the previous value of the motor stage to a current value, and if the motor stage increases (e.g., from 3 to 4), the ECU 80 determines that the ACG starter motor 70 is rotating in the forward direction. If the motor stage decreases (e.g., from 4 to 3), the ECU 80 is determined that it is rotating in the reverse direction.

Here, in the rotation-direction determination as described above, the rotation direction may possibly be determined incorrectly due to intrusion of noise into the sensor output. According to the experiments of the inventor of the present application, it became clear that the noise entering the sensor output often comes from the ACG starter motor 70 upon energizing the ACG starter motor 70.

In the configuration in the swing back control and the reversing control as described above, after the reverse rotation drive of the ACG starter motor 70 is started, a change to the forward rotation of the crankshaft 51 triggers stopping the reverse rotation drive of the ACG starter motor 70. For this purpose, effective use is made of the fact that, when the ACG starter motor 70 is rotated in the reverse direction to cause the crankshaft 51 to approach the compression TDC, a compression reaction force of the piston exceeds the reverse rotation driving force of an ACG starter motor 70 at a predetermined angle, so that the piston is pushed back. Then, it is estimated and sensed that the crankshaft 51 reaches a point at a predetermined angle after TDC on compression.

The swing back reverse rotation duty ratio setting unit 91 and the reversing reverse-rotation duty ratio setting unit 101 (see Fig. 5) as described earlier set respectively duty ratios for reverse rotation drive in the swing back control and the reversing control within the range in which the crankshaft 51 does not rotate beyond compression TDC by being rotated in the reverse direction.

Comparing between the swing back control and the idle stop starting time reversing control, a difference is that in the swing back control, the reverse rotation drive is stopped and the forward rotation drive is started for engine start-up, but in the idle stop starting time reversing control the reverse rotation drive is stopped in preparation for restarting. However, the method of deriving timing for stopping the reverse rotation drive is the same.

In the method, the accuracy of timing for stopping the reverse rotation drive relies on the accuracy of sensor output of the motor angle sensor 29. In this respect, if noise occurring during reverse rotation drive of the ACG starter motor 70 is detected incorrectly as a forward rotation signal, the reverse rotation drive may possibly be stopped before the crankshaft 51 reaches a predetermined angle ATDC on compression. Then, as described above, since noise, which may be a cause of detection errors, is likely to occur immediately upon energizing the ACG starter motor 70, the reverse rotation drive may be stopped due to noise at the instant following the starting of the reverse rotation drive, possibly resulting in less effect of improving the startability produced by the reverse rotation drive.

For example, a conceivable method addressing the above technical problem is to neglect the forward rotation signals during a predetermined time period from the start of the reverse rotation drive. In this method, if the predetermined time period is set too short, when the reverse rotation drive is stopped due to noise occurring after a lapse of the predetermined time period, a sufficient approach-run period may not be ensured, whereas if the predetermined time period is set too longer, the reverse rotation drive may be continued beyond a desired stop position, leading to a difficulty of setting an appropriate, predetermined time period. Another disadvantage is to increase the control load placed on the ECU 80 if the predetermined time period is set more minutely and exactly for optimizations.

Further, in another conceivable method, instead of using a first forward rotation signal produced during the reverse rotation drive as a trigger, when forward rotation signals are detected continuously, the reverse rotation drive may be stopped. This method involves disadvantages that the reverse rotation drive may possibly be continued beyond a desired stop position to increase uselessly power consumption, and also that a timing delay for stopping the reverse rotation drive increases the time required to start the engine after the rotation direction is changed to be forward.

To address this, in the present invention, a lapse of a predetermined time period after the reverse rotation drive is started, and reverse-signal detection three times in succession after the reverse rotation drive is started triggers setting a "compression detection permission flag", and then the reverse rotation drive is stopped in response to detection of a forward rotation signal subsequent to that.

This is derived from the experimental results in which the possibility that the forward rotation signals detected after the entry into the stability state result from noise (there is little occurrence of noise incorrectly detected as a forward rotation signal after the entry into the stability state) is extremely low, because, if the reverse rotation signal is detected three times in succession, in other words, the reverse rotation state is detected throughout the predetermined time period, this means that the reverse rotation drive has already entered a stability state past the region in which noise tends to occur.

With such condition setting, it is possible to prevent the reverse rotation drive from being stopped at too early timing if noise occurs immediately upon energization for the reverse rotation drive, as well as it is possible to, if reverse rotation signals are detected three times in succession, stop the reverse rotation drive in response to a forward rotation signal output subsequently. Note that, in the embodiment, because a forward rotation signal or reverse rotation signal is detected at every time the crankshaft 51 rotates 10 degrees, when the reverse rotation signals are detected three times in succession, this means that the crankshaft 51 is rotated at least over 20 degrees in the reverse direction.

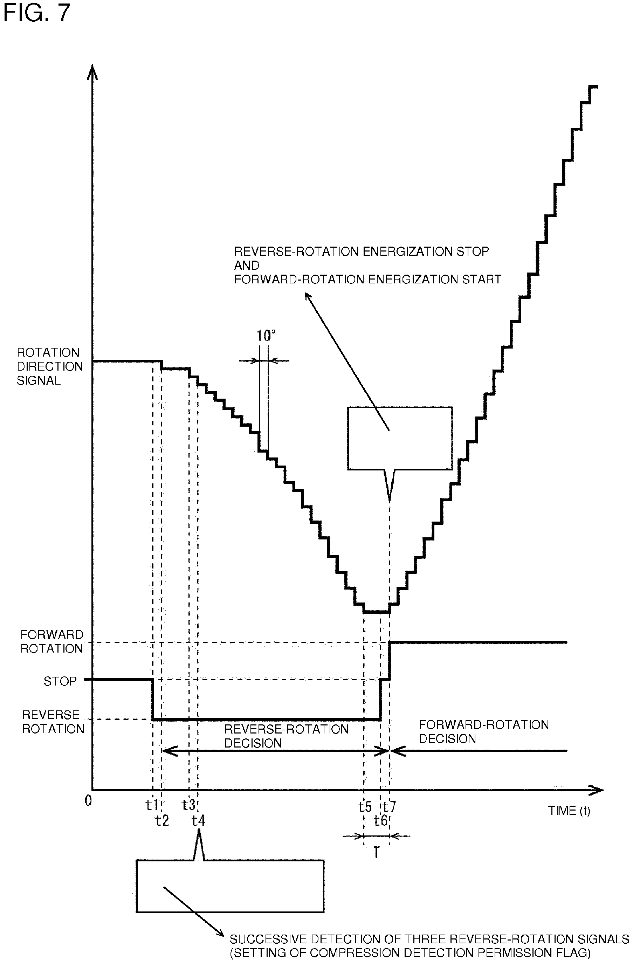

Fig. 7 is a timechart showing the relationship between the rotational state of the ACG starter motor 70 during the swing back control and the determination of the rotation direction. A rotation-direction signal represents a sequence of forward rotation signals and reverse rotation signals derived by the ECU 80 on the basis of the sensor output produced by the motor angle sensor 29 at every time the ACG starter motor 70 rotates 10 degrees. Form this, a descending staircase-form graph is plotted during the reverse rotation drive, whereas an ascending staircase-form graph is plotted during the forward rotation drive. Motor movement represents actual movement of the ACG starter motor 70 (stop, forward rotation, reverse rotation).

At time t1, the ACG starter motor 70 at rest is started to rotate in the reverse direction upon energization for reverse rotation drive. At time t2, then, upon detection of a first reverse rotation signal, the motor rotation direction determination results in reverse rotation decision. Then, a second reverse rotation signal is detected at time t3, and at time t4 following time t3, a third reverse rotation signal is detected. Thereupon, the successive detection of three reverse rotation signals trigger setting a "compression detection permission flag".

In the timechart, after setting a "compression detection permission flag", at time t5, the reverse rotation driving force of the ACG starter motor 70 becomes approximately equal to the compression reaction force of the piston. After that, by overshooting a balance point by aid of an inertial force of the rotating system, the compression reaction force of the piston exceeds the reverse rotation driving force of the starter motor 70, so that the direction of rotation is switched from reverse to forward during the period of time t5 and time t7. In the embodiment, at time t7 after a lapse of a predetermined time T from time t5, switching from the reverse rotation to the forward rotation of the ACG starter motor 70 is estimated and detected, so that the forward decision replaces the reverse decision. Note that switching from the reverse decision to the forward decision is also performed if a forward rotation signal is input before a lapse of the predetermined time T.

Then, upon detection of the forward rotation signal at time t7, the reverse rotation drive of the ACG starter motor 70 is stopped. In the swing back control illustrated in the timechart, the forward rotation drive is started upon stopping of the reverse rotation drive. On the other hand, in the "idle-stop-start-time reversing control", after the reverse rotation drive is stopped at time t7, the state of waiting for the restarting operation (open operation of the throttle grip) by an occupant is brought about.

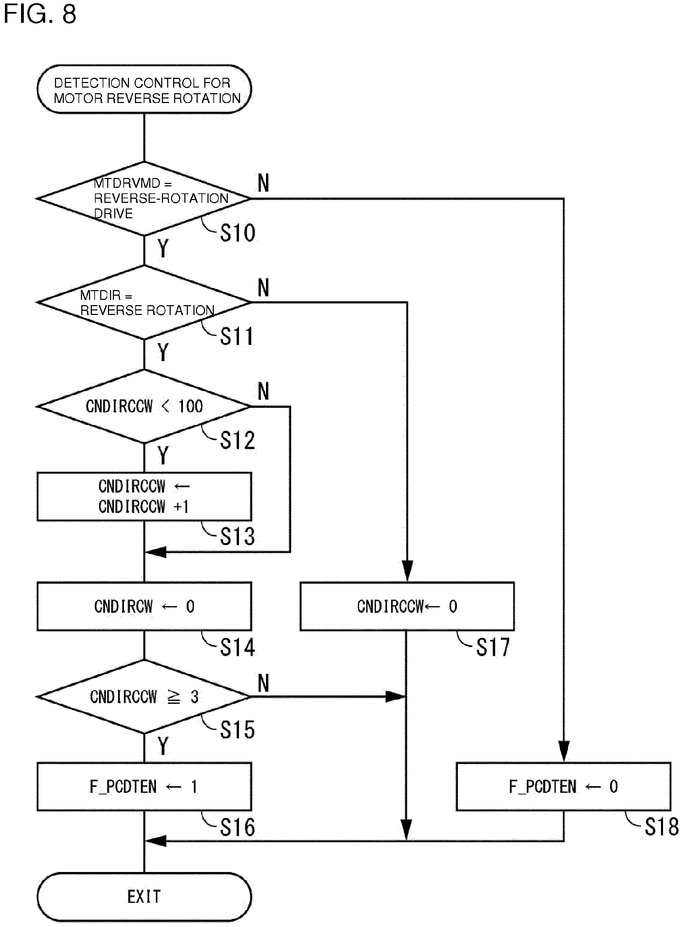

Fig. 8 is a flowchart showing the procedure of controlling the detection of motor reverse rotation. The ECU 80 includes a forward rotation counter (CNDIRCW) to count the number of forward rotation signals input successively, and a reverse rotation counter (CNDIRCCW) to count the number of reverse rotation signals input successively, each of which is used to determine the direction of motor rotation. The flowchart corresponds to steps from the reverse rotation driving state to the stop of the reverse rotation drive in the swing back control or idle stop starting time reversing control.

In step S10, it is determined whether a motor drive mode (MTDRVMD) corresponding to a drive signal from the ECU 80 is a reverse rotation drive mode or not. If the determination is affirmative, the procedure moves to step S11.

In step S11, the rotation direction determination (MTDIR) shown in Fig. 6 is made whether to be "the reverse rotation decision" or not. If the determination is affirmative, the procedure moves to step S12. In step S12, it is determined whether a count value of the reverse rotation counter (CNDIRCCW) is less than 100 or not. If the determination is affirmative, the procedure moves to step S13 to increment the count value of the reverse rotation counter (CNDIRCCW) by one (+1). On the other hand, if the determination in step S12 is negative, the procedure skips step S13 and moves to step S 14. Note that if the determination in step S11 is negative, the procedure moves to step S17 to reset the reverse rotation counter (CNDIRCCW), and a sequence of control process ends.

In step S14, the forward rotation counter (CNDIRCW) is reset by setting the counter value to zero, and the procedure moves to step S15. In step S15, it is determined whether or not the counter value of the reverse rotation counter (CNDIRCCW) becomes 3 or higher. If the determination is affirmative, the procedure moves to step S16 to set a compression detection permission flag (F_PCDTEN) (substitute one), and a sequence of control process ends. Note that if the determination in step S15 is negative, end of a sequence of control process follows.

On the other hand, if the determination in step S10 is negative, that is, if the motor drive mode (MTDRVMD) is a forward rotation drive mode, in the following step S18, the compression detection permission flag (F_PCDTEN) is not set (substitute zero), and a sequence of control process ends.

Note that the embodiment is based on the assumption that stopping the reverse rotation drive is triggered by detecting a forward rotation signal while the compression detection permission flag (F_PCDTEN) is on. However, in addition to this setting, a timer may be used to measure an interval between each two U-, V-, W-phase sensor outputs from the motor angle sensor 29 and then stopping the reverse rotation drive may be triggered by detecting a current interval sufficiently longer (e.g., three or more times) than the preceding interval while the compression detection permission flag (F_PCDTEN) is on. This estimates and detects, from a longer sensor-output interval, a state in which the compression reaction force of the piston increases to be balanced with the reverse rotation driving force of an ACG starter motor 70.

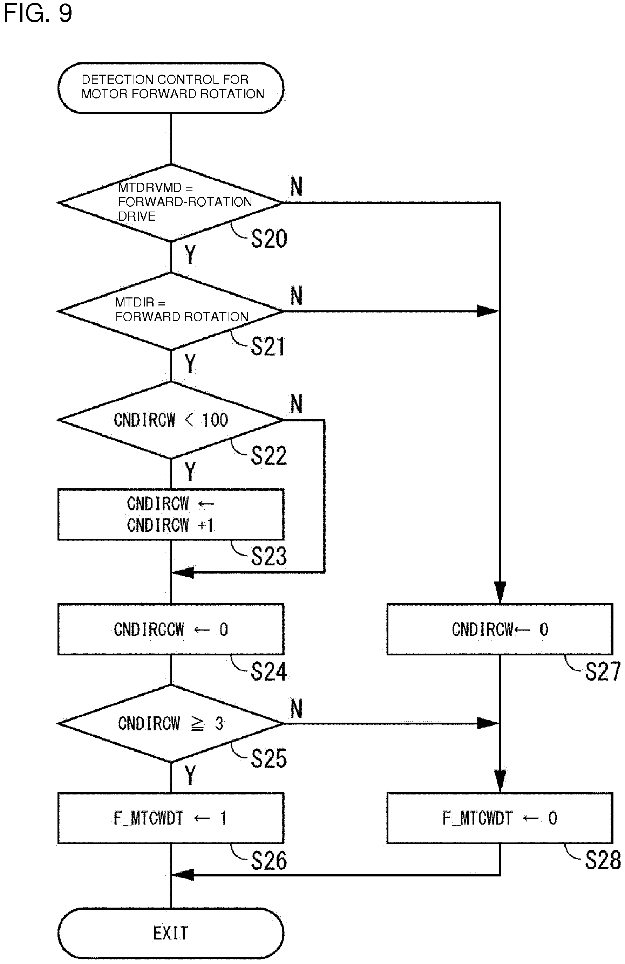

Fig. 9 is a flowchart showing the procedure of controlling the detection of motor forward rotation. The engine start control system in accordance with the embodiment may be configured such that, if the engine is not started with the forward rotation drive produced by the restarting operation after the idle stop starting time reversing control, the reverse rotation drive is automatically performed again to wait. In this configuration, when a reverse rotation signal is detected after the forward rotation drive is started for engine start-up, it is determined that the compression reaction force of the piston causes switching from the forward rotation to the reverse rotation when the crankshaft stops because the engine does not start, so that the reverse rotation drive is operated as a preparation to a restart.

The flowchart is for eliminating the influence of noise on the determination whether to perform again the reverse rotation drive after the forward rotation drive is started, which corresponds with the control in which setting a "reverse rotation-drive necessity/unnecessity determination permission flag" is triggered by the conclusion of a second predetermined time period after the forward rotation drive is started, specifically, successive detection of the three forward rotation signals, and then the reverse rotation drive is started in response to a detection of the following reverse rotation signal.

With such condition setting, it is possible to prevent the reverse rotation drive from being started immediately after the forward rotation is started if noise occurs upon energization for the forward rotation drive. Further, if forward rotation signals are detected three times in succession, in other words, if a forward rotation state persisting during second predetermined time period is detected, the reverse rotation drive is able to be started in response to a reverse rotation signal output subsequently.

Note that, if the engine does not start with the forward rotation drive in the swing back control, since the swing back control is performed by operating the starter switch 35 again, the control of the flowchart is not applied.

In step S20, it is determined whether a motor drive mode (MTDRVMD) corresponding to a drive signal from the ECU 80 is a forward rotation drive mode or not. If the determination is affirmative, the procedure moves to step S21.

In step S21, the rotation direction determination (MTDIR) shown in Fig. 6 is made whether to be "the forward rotation decision" or not. If the determination is affirmative, the procedure moves to step S22. In step S22, it is determined whether or not a count value of the forward rotation counter (CNDIRCW) is less than 100. If the determination is affirmative, the procedure moves to step S23 to increment the count value of the forward rotation counter (CNDIRCW) by one (+1). On the other hand, if the determination in step S22 is negative, the procedure skips step S23 and moves to step S 24.

In step S24, the reverse rotation counter (CNDIRCCW) is reset by setting the counter value to zero, and the procedure moves to step S25. In step S25, it is determined whether or not the counter value of the forward rotation counter (CNDIRCW) becomes 3 or higher. If the determination is affirmative, the procedure moves to step S26 to set a "reverse rotation-drive necessity/unnecessity determination permission flag" (F_MTCWDT) (substitute one), and a sequence of control process ends. Note that if the determinations in step S21 and step S25 are negative, end of a sequence of control process follows.

Note that the embodiment is based on the assumption that starting the reverse rotation drive is triggered by detecting a reverse rotation signal while the reverse rotation-drive necessity/unnecessity determination permission flag (F_MTCWDT) is on. However, in addition to this setting, a timer may be used to measure an interval between each two U-, V-, W-phase sensor outputs from the motor angle sensor 29 and then starting the reverse rotation drive may be triggered by detecting a current interval sufficiently longer (e.g., three or more times) than the preceding interval while the reverse rotation-drive necessity/unnecessity determination permission flag (F_MTCWDT) is on. This estimates and detects, from a longer sensor-output interval, a state in which the compression reaction force of the piston increases to be balanced with the reverse rotation driving force of an ACG starter motor 70.

It should be noted that the structure of a power unit and an engine, the structure and form of an ACG starter motor, the structure and accuracy of a motor angle sensor, set values of a predetermined time period and a second predetermined time period, and the like are not limited to those in the above embodiment, and various changes may be made. The engine start control system according to the present invention may be applied to a variety of vehicles, including a scooter-type motorcycle, adopting at least one of the swing back control and the idle stop starting time reversing control.

### [Reference Signs List]

1 ... Motorcycle (saddle-ride type vehicle)
2 ... Power unit
51 ... Crankshaft
23 ... Throttle opening sensor
29 ... Motor angle sensor
35 ... Starter switch
70 ... ACG starter motor (integrated starter generator)
80 ... Control unit (ECU)
90 ... Swing back control unit
100 ... Idle stop starting time reversing control unit
E ... Engine
MTDIR ... Rotation direction determination
MTDRVMD ... Motor drive mode
CNDIRCW ... Forward rotation counter
CNDIRCCW .... Reverse rotation counter
F_PCDTEN ... Compression detection permission flag
F_MTCWDT ... Re-reverse rotation necessity/unnecessity determination permission flag

## Claims

1. An engine start control system for a saddle-ride type vehicle, comprising:
an integrated starter generator (70) rotating in synchrony with a crankshaft (51) of an engine (E) and driving a forward rotation and a reverse rotation of the crankshaft (51), and
a control unit (80) configured for controlling the integrated starter generator (70),
a motor angle sensor (29) for detecting a rotation angle of the integrated starter generator (70),
the control unit (80) is configured for determining on the basis of the motor angle sensor output the motor rotation direction of the integrated starter generator (70), and
the control unit (80) is configured to operate the integrated starter generator (70) to drive the reverse rotation of the crankshaft (51) after the engine (E) has stopped,
**characterized in that**:
the control unit (80) is configured for deriving a motor rotation-direction signal on the basis of the motor angle sensor output and of the determined motor rotation direction at every time the integrated starter generator (70) rotates 10 degrees, wherein rotation-direction signal is incremented during forward rotation of the crankshaft (51) and inversely decremented during reverse rotation of the crankshaft (51),
the control unit (80) is configured to maintain reverse rotation drive during a predetermined time period until the rotation direction signal has been successively decremented three times (t4) after the start (t1) of the reverse rotation state of the crankshaft (51) caused by the integrated starter generator (70) and until the rotation-direction signal is incremented (t7).

2. The engine start control system of a saddle-ride type vehicle according to claim 1, wherein, when a forward rotation state of the crankshaft (51) is detected after the reverse rotation state of the crankshaft (51) is detected successively during the predetermined time period, the control unit (80) is configured to stop the reverse rotation drive of the crankshaft (51) caused by the integrated starter generator (70).

3. The engine start control system of a saddle-ride type vehicle according to claim 1,
wherein: the control unit (80) is configured to derive motor stages (0 to 5) having values varied for each predetermined angle of the crankshaft (51) on the basis of sensor output of the motor angle sensor (29), and
the control unit (80) is configured to compare a current value and the preceding value of the motor stages (0 to 5) with each other in order to determine for the each predetermined angle whether the crankshaft (51) is in the reverse rotation state or the forward rotation state.

4. The engine start control system of a saddle-ride type vehicle according to claim 3, wherein, when a first forward rotation state of the crankshaft (51) is detected after the reverse rotation state is detected successively during the predetermined time period, the control unit (80) is configured to stop the reverse rotation drive of the crankshaft (51).

5. The engine start control system of a saddle-ride type vehicle according to claim 1,
wherein: the control unit (80) is configured to perform engine start control to cause the integrated starter generator (70) to drive a forward rotation of the crankshaft (51) after the reverse rotation drive is stopped, and
the control unit (80) is configured to stop the forward rotation and to perform a reverse rotation again when the reverse rotation state of the crankshaft (51) is detected after the forward rotation drive under the engine start control is started.

6. The engine start control system according to claim 5, wherein:
the control unit (80) is configured to derive motor stages (0 to 5) having values varied for each predetermined angle of the crankshaft (51) on the basis of sensor output of the motor angle sensor (29),
the control unit (80) is configured to compare a current value and the preceding value of the motor stages (0 to 5) with each other in order to determine for the each predetermined angle whether the crankshaft (51) is in the reverse rotation state or the forward rotation state, and
after the forward rotation drive under the engine start control is started, and after the forward rotation state of the crankshaft (51) is detected successively during a second predetermined time period, when a first reverse rotation state of the crankshaft (51) is detected, the control unit (80) is configured to stop the forward rotation drive of the crankshaft (51) and to perform a reverse rotation drive of the crankshaft (51) again.

## Patentansprüche

1. Motorstartsteuersystem für ein Sattelfahrzeug, Folgendes umfassend:
einen integrierten Startergenerator (70), der sich synchron mit einer Kurbelwelle (51) eines Motors (E) dreht und eine Vorwärtsdrehung und eine Rückwärtsdrehung der Kurbelwelle (51) antreibt, und
eine Steuereinheit (80), die zum Steuern des integrierten Startergenerators (70) konfiguriert ist,
einen Motorwinkelsensor (29) zum Erfassen eines Drehwinkels des integrierten Startergenerators (70),
wobei die Steuereinheit (80) dazu konfiguriert ist, die Motordrehrichtung des integrierten Startergenerators (70) auf der Basis der Motorwinkelsensorausgabe zu bestimmen, und
die Steuereinheit (80) dazu konfiguriert ist, den integrierten Startergenerator (70) zu betreiben, um die Rückwärtsdrehung der Kurbelwelle (51) anzutreiben, nachdem der Motor (E) gestoppt wurde,
**dadurch gekennzeichnet, dass**:
die Steuereinheit (80) dazu konfiguriert ist, ein Motordrehrichtungssignal auf der Basis der Motorwinkelsensorausgabe und der bestimmten Motordrehrichtung, jedes Mal, wenn der integrierte Startergenerator (70) sich um 10 Grad dreht, abzuleiten, wobei das Drehrichtungssignal während der Vorwärtsdrehung der Kurbelwelle (51) inkrementiert und während der Rückwärtsdrehung der Kurbelwelle (51) umgekehrt dekrementiert wird,
die Steuereinheit (80) dazu konfiguriert ist, den Rückwärtsdrehantrieb während einer vorbestimmten Zeitspanne aufrechtzuerhalten, bis das Drehrichtungssignal nach dem Start (t1) des durch den integrierten Startergenerator (70) verursachten Rückwärtsdrehzustands der Kurbelwelle (51) sukzessive dreimal dekrementiert wurde (t4) und bis das Drehrichtungssignal inkrementiert wird (t7).

2. Motorstartsteuersystem eines Sattelfahrzeugs nach Anspruch 1, wobei, wenn ein Vorwärtsdrehzustand der Kurbelwelle (51) erfasst wird, nachdem der Rückwärtsdrehzustand der Kurbelwelle (51) während der vorbestimmten Zeitspanne sukzessive erfasst wurde, die Steuereinheit (80) dazu konfiguriert ist, den durch den integrierten Startergenerator (70) verursachten Rückwärtsdrehantrieb der Kurbelwelle (51) zu stoppen.

3. Motorstartsteuersystem eines Sattelfahrzeugs nach Anspruch 1, wobei: Die Steuereinheit (80) dazu konfiguriert ist, Motorstufen (0 bis 5), die Werte aufweisen, die für jeden vorbestimmten Winkel der Kurbelwelle (51) variiert sind, auf der Basis der Sensorausgabe des Motorwinkelsensors (29) abzuleiten, und
die Steuereinheit (80) dazu konfiguriert ist, einen aktuellen Wert und den vorhergehenden Wert der Motorstufen (0 bis 5) miteinander zu vergleichen, um für jeden vorbestimmten Winkel zu bestimmen, ob sich die Kurbelwelle (51) im Rückwärtsdrehzustand oder im Vorwärtsdrehzustand befindet.

4. Motorstartsteuersystem eines Sattelfahrzeugs nach Anspruch 3, wobei, wenn ein erster Vorwärtsdrehzustand der Kurbelwelle (51) erfasst wird, nachdem der Rückwärtsdrehzustand während der vorbestimmten Zeitspanne sukzessive erfasst wurde, die Steuereinheit (80) dazu konfiguriert ist, den Rückwärtsdrehantrieb der Kurbelwelle (51) zu stoppen.

5. Motorstartsteuersystem eines Sattelfahrzeugs nach Anspruch 1,
wobei: Die Steuereinheit (80) dazu konfiguriert ist, eine Motorstartsteuerung durchzuführen, um den integrierten Startergenerator (70) dazu zu veranlassen, eine Vorwärtsdrehung der Kurbelwelle (51) anzutreiben, nachdem der Rückwärtsdrehantrieb gestoppt wurde, und
die Steuereinheit (80) dazu konfiguriert ist, die Vorwärtsdrehung zu stoppen und wieder eine Rückwärtsdrehung durchzuführen, wenn der Rückwärtsdrehzustand der Kurbelwelle (51) erfasst wird, nachdem der Vorwärtsdrehantrieb unter der Motorstartsteuerung gestartet wurde.

6. Motorstartsteuersystem nach Anspruch 5, wobei:
die Steuereinheit (80) dazu konfiguriert ist, Motorstufen (0 bis 5), die Werte aufweisen, die für jeden vorbestimmten Winkel der Kurbelwelle (51) variiert sind, auf der Basis der Sensorausgabe des Motorwinkelsensors (29) abzuleiten,
die Steuereinheit (80) dazu konfiguriert ist, einen aktuellen Wert und den vorhergehenden Wert der Motorstufen (0 bis 5) miteinander zu vergleichen, um für jeden vorbestimmten Winkel zu bestimmen, ob sich die Kurbelwelle (51) im Rückwärtsdrehzustand oder im Vorwärtsdrehzustand befindet, und
nachdem der Vorwärtsdrehantrieb unter der Motorstartsteuerung gestartet wird, und nachdem der Vorwärtsdrehzustand der Kurbelwelle (51) während einer zweiten vorbestimmten Zeitspanne sukzessive erfasst wurde, wenn ein erster Rückwärtsdrehzustand der Kurbelwelle (51) erfasst wird, die Steuereinheit (80) dazu konfiguriert ist, den Vorwärtsdrehantrieb der Kurbelwelle (51) zu stoppen und wieder einen Rückwärtsdrehantrieb der Kurbelwelle (51) durchzuführen.

## Revendications

1. Système de commande de démarrage de moteur d'un véhicule de type à selle, comprenant :
un générateur de démarrage intégré (70) tournant en synchronie avec un vilebrequin (51) d'un moteur (E) et entraînant une rotation vers l'avant et une rotation vers l'arrière du vilebrequin (51), et
une unité de commande (80) configurée pour commander le générateur de démarrage intégré (70),
un capteur d'angle de moteur (29) pour détecter un angle de rotation du générateur de démarrage intégré (70),
l'unité de commande (80) est configurée pour déterminer, sur la base de la sortie du capteur d'angle de moteur, la direction de rotation de moteur du générateur de démarrage intégré (70), et
l'unité de commande (80) est configurée pour faire fonctionner le générateur de démarrage intégré (70) pour entraîner la rotation vers l'arrière du vilebrequin (51) après l'arrêt du moteur (E),
**caractérisé en ce que** :
l'unité de commande (80) est configurée pour déduire un signal de direction de rotation de moteur sur la base de la sortie du capteur d'angle de moteur et de la direction de rotation de moteur déterminée à chaque rotation de 10 degrés du générateur de démarrage intégré (70), dans lequel le signal de direction de rotation est incrémenté pendant la rotation vers l'avant du vilebrequin (51) et inversement décrémenté pendant la rotation vers l'arrière du vilebrequin (51),
l'unité de commande (80) est configurée pour maintenir un entraînement de rotation vers l'arrière pendant une période de temps prédéterminée jusqu'à trois décrémentations (t4) successives du signal de direction de rotation après le début (t1) de l'état de rotation vers l'arrière du vilebrequin (51) provoqué par le générateur de démarrage intégré (70) et jusqu'à l'incrémentation (t7) du signal de direction de rotation.

2. Système de commande de démarrage de moteur d'un véhicule de type à selle selon la revendication 1, dans lequel, lorsqu'un état de rotation vers l'avant du vilebrequin (51) est détecté après que l'état de rotation vers l'arrière du vilebrequin (51) est détecté successivement pendant la période de temps prédéterminée, l'unité de commande (80) est configurée pour arrêter l'entraînement de rotation vers l'arrière du vilebrequin (51) provoqué par le générateur de démarrage intégré (70).

3. Système de commande de démarrage de moteur d'un véhicule de type à selle selon la revendication 1,
dans lequel : l'unité de commande (80) est configurée pour déduire des étages de moteur (0 à 5) présentant des valeurs qui varient pour chaque angle prédéterminé du vilebrequin (51) sur la base d'une sortie de capteur du capteur d'angle de moteur (29), et
l'unité de commande (80) est configurée pour comparer une valeur de courant et la valeur précédente des étages de moteur (0 à 5) l'une à l'autre afin de déterminer, pour le chaque angle prédéterminé, si le vilebrequin (51) est dans l'état de rotation vers l'arrière ou dans l'état de rotation vers l'avant.

4. Système de commande de démarrage de moteur d'un véhicule de type à selle selon la revendication 3, dans lequel, lorsqu'un premier état de rotation vers l'avant du vilebrequin (51) est détecté après que l'état de rotation vers l'arrière est détecté successivement pendant la période de temps prédéterminée, l'unité de commande (80) est configurée pour arrêter l'entraînement de rotation vers l'arrière du vilebrequin (51).

5. Système de commande de démarrage de moteur d'un véhicule de type à selle selon la revendication 1,
dans lequel : l'unité de commande (80) est configurée pour réaliser une commande de démarrage de moteur pour amener le générateur de démarrage intégré (70) à entraîner une rotation vers l'avant du vilebrequin (51) après l'arrêt de l'entraînement de rotation vers l'arrière, et
l'unité de commande (80) est configurée pour arrêter la rotation vers l'avant et pour réaliser à nouveau une rotation vers l'arrière lorsque l'état de rotation vers l'arrière du vilebrequin (51) est détecté après le début de l'entraînement de rotation vers l'avant sous l'effet de la commande de démarrage de moteur.

6. Système de commande de démarrage de moteur selon la revendication 5, dans lequel :
l'unité de commande (80) est configurée pour déduire des étages de moteur (0 à 5) présentant des valeurs qui varient pour chaque angle prédéterminé du vilebrequin (51) sur la base d'une sortie de capteur du capteur d'angle de moteur (29),
l'unité de commande (80) est configurée pour comparer une valeur de courant et la valeur précédente des étages de moteur (0 à 5) l'une à l'autre afin de déterminer, pour le chaque angle prédéterminé, si le vilebrequin (51) est dans l'état de rotation vers l'arrière ou dans l'état de rotation vers l'avant, et
après le début de l'entraînement de rotation vers l'avant sous l'effet de la commande de démarrage de moteur, et après que l'état de rotation vers l'avant du vilebrequin (51) est détecté successivement pendant une deuxième période de temps prédéterminée, lorsqu'un premier état de rotation vers l'arrière du vilebrequin (51) est détecté, l'unité de commande (80) est configurée pour arrêter l'entraînement de rotation vers l'avant du vilebrequin (51) et réaliser à nouveau un entraînement de rotation vers l'arrière du vilebrequin (51).
